(19)

Europäisches
Patentamt
European
Patent Office
Office européen
des brevets

(11) **EP 3 079 111 A1**

(12) **EUROPEAN PATENT APPLICATION**

(43) Date of publication:
**12.10.2016 Bulletin 2016/41**

(51) Int Cl.:
***G06Q 10/06*** (2012.01)   ***G06F 9/48*** (2006.01)
***G06F 9/50*** (2006.01)

(21) Application number: **16163351.6**

(22) Date of filing: **31.03.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **08.04.2015 JP 2015079496**

(71) Applicant: **FUJITSU LIMITED
Kawasaki-shi,
Kanagawa 211-8588 (JP)**

(72) Inventors:
• **HAYAKAWA, Masao
Kawasaki-shi, Kanagawa 211-8588 (JP)**
• **HASHIMOTO, Tsuyoshi
Kawasaki-shi, Kanagawa 211-8588 (JP)**

(74) Representative: **Fenlon, Christine Lesley
Haseltine Lake LLP
Lincoln House, 5th Floor
300 High Holborn
London WC1V 7JH (GB)**

(54) **SYSTEM, METHOD AND DEVICE FOR JOB SCHEDULING**

(57)    A system includes a calculating device configured to execute a job, and a management device configured to schedule an execution start time of the job executed by the calculating device, the management device comprising a memory, and a processor coupled to the memory and configured to obtain a first time that is a scheduled time of when the job will start to be executed by the calculating device, calculate a delay time for the job by performing multiple regression analysis based on past execution performance of the calculation device, predict the execution start time of the job based on the first time and the delay time, and output the predicted execution start time to an output device.

## FIG. 1

:PREDICTED DELAY TIME

**Description**

[TECHNICAL FIELD]

The embodiments discussed herein are related to a system, a method and a managing device.

[BACKGROUND ART]

In a computer system, scheduling of jobs to be executed is performed. For example, in a parallel computing system in which a plurality of jobs are executed in parallel by a plurality of calculating devices, scheduling is performed to determine the order of jobs and the calculating devices to which the jobs are allocated. In addition, the scheduled execution start time of each of the jobs is displayed on a display device based on the scheduling result, and the execution time duration of the job specified by a user may be notified to the user.

For the job scheduling, there is known a technology in a related art that assists the user to calculate the waiting time of each job and warns the user when a job having a long waiting time is detected the waiting time of which exceeds a certain threshold value.

In addition, a technology in a related art is known that improves the operating rate of a system within a range in which a job the delay of which is prohibited is not delayed by determining and prioritizing a job that is allowed to be overtaken and does not cause the execution start time of the job the delay of which is prohibited to be delayed even when jumping ahead the job the delay of which is prohibited.

In addition, there is known a technology in a related art that causes a certain job to be completed by a target end time by raising the priority level of processing of a job in a critical path, which affects the start time of the certain job when the estimated end time of the certain job is later than the target end time.

[Citation List]

[Patent Literature]

[Patent Literature 1]Japanese Laid-open Patent Publication No. 2009-230584
[Patent Literature 2]Japanese Laid-open Patent Publication No. 2012-173753
[Patent Literature 3]Japanese Laid-open Patent Publication No. 2004-295731

[SUMMARY]

[TECHNICAL PROBLEM]

However, in the job scheduling in the related art, the scheduled execution start time of each of the jobs may not be accurate. The job scheduling is performed based on the execution time of the job specified by the user, but there is a case in which the execution time of the job specified by the user is not accurate.

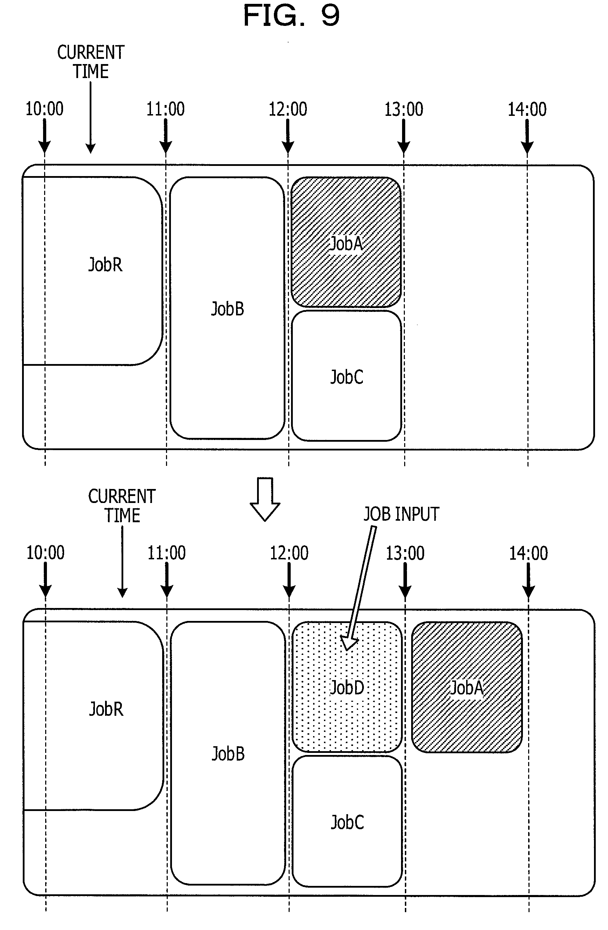

In addition, when a job having a high priority level is input after the scheduling, the execution start time of a job having a low priority level is delayed. FIG. 9 is a diagram illustrating an occurrence of delay due to input of a job having a high priority level. In FIG. 9, the horizontal axis indicates time, and the vertical axis indicates a plurality of calculating devices to which jobs are allocated.

As illustrated in the upper part of FIG. 9, it is assumed that scheduling of Job R, Job B, Job A, and Job C is performed. Next, when Job D having a higher priority level than Job A is input, as illustrated in the lower part of FIG. 9, Job D is executed before Job A, which delays the start time of Job A. In FIG. 9, the start time of Job A, which was supposed to be 12:00, becomes 13:00, where the start time is delayed by one hour.

[SOLUTION TO PROBLEM]

According to an embodiment of one aspect of the invention, a system includes a calculating device configured to execute a job, and a management device configured to schedule an execution start time of the job executed by the calculating device, the management device comprising a memory, and a processor coupled to the memory and configured to obtain a first time that is a scheduled time of when the job will start to be executed by the calculating device, calculate a delay time for the job by performing multiple regression analysis based on past execution performance of the calculation device, predict the execution start time of the job based on the first time and the delay time, and output the predicted execution start time to an output device.

[Advantageous Effects of the Invention]

In an embodiment, a scheduled execution start time of a job is accurately predicted.

[BRIEF DESCRIPTION OF DRAWINGS]

FIG. 1 is a diagram illustrating job scheduling according to an embodiment;
FIG. 2 is a diagram illustrating a configuration of a parallel computing system according to the embodiment;
FIG. 3 is a diagram illustrating a configuration of a management node;
FIG. 4A is a diagram illustrating a factor related to a user and a job;
FIG. 4B is a diagram illustrating factors related to a trend;
FIG. 5 is a diagram illustrating a delay performance example used for calculation of a coefficient;
FIG. 6 is a diagram illustrating a creation example of past performance based on statistical information;
FIG. 7 is a flowchart illustrating a flow of calculation processing of a scheduled execution start time by a job scheduler;
FIG. 8 is a diagram illustrating a configuration of a computer that executes a job execution start time prediction program according to the embodiment; and
FIG. 9 is a diagram illustrating an occurrence of delay due to input of a job having a high priority level.

[DESCRIPTION OF EMBODIMENTS]

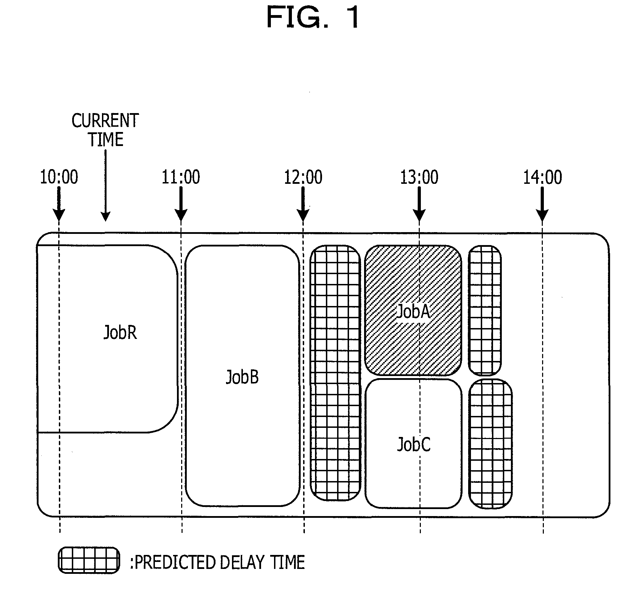

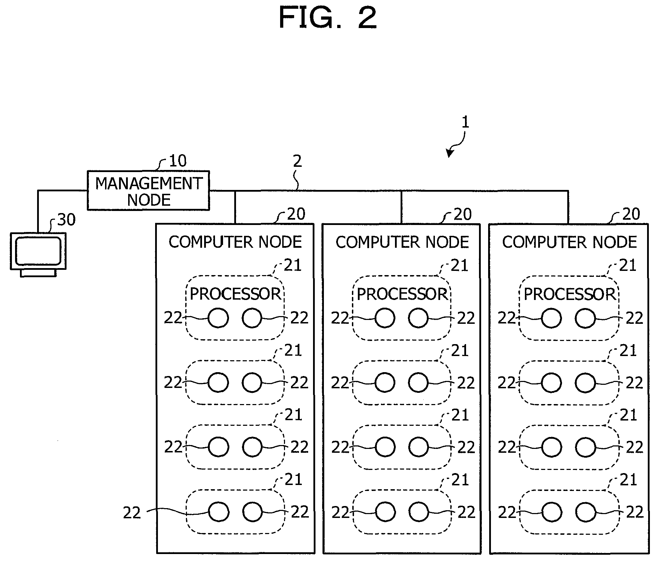

In the job scheduling in the related art, the scheduled execution start time of each of the jobs may not be accurate. The job scheduling is performed based on the execution time duration of the job specified by the user, but there is a case in which the execution time duration of the job specified by the user is not accurate.
In addition, when a job having a high priority level is input after the scheduling, the execution start time of a job having a low priority level is delayed. FIG. 9 is a diagram illustrating an occurrence of delay due to input of a job having a high priority level. In FIG. 9, the horizontal axis indicates time, and the vertical axis indicates a plurality of calculating devices to which jobs are allocated.
As illustrated in the upper part of FIG. 9, it is assumed that scheduling of Job R, Job B, Job A, and Job C is performed. Next, when Job D having a higher priority level than Job A is input, as illustrated in the lower part of FIG. 9, Job D is executed before Job A, which delays the start time of Job A. In FIG. 9, the start time of Job A, which was supposed to be 12:00, becomes 13:00, where the start time is delayed by one hour.
Embodiments of a computer system, a calculating device, a job execution start time prediction method, and a job execution start time prediction program of the technology discussed herein are described in detail below, by way of example only, with reference to the drawings. The technology discussed herein is not limited to the embodiments.
First, job scheduling according to an embodiment is described. FIG. 1 is a diagram illustrating the job scheduling according to the embodiment. As illustrated in FIG. 1, in the job scheduling according to the embodiment, the scheduling of jobs is performed so that Jobs A and C are not executed immediately after the execution of Job B has been completed, but are executed when a predicted delay time has elapsed. The predicted delay time is a time predicted by a scheduler using multiple regression analysis based on past performance.
That is, the job scheduler according to the embodiment predicts a delay time of execution of a preceding job by using the multiple regression analysis based on the past performance and performs job scheduling so that a job is started so as to be delayed by a delay time. As described above, the job scheduler according to the embodiment predicts a start time of a job by predicting a delay time by using the multiple regression analysis and reflecting the predicted delay time in the job scheduling.
A configuration of a parallel computing system according to the embodiment is described below. FIG. 2 illustrates a configuration of the parallel computing system according to the embodiment. As illustrated in FIG. 2, a parallel computing system 1 according to the embodiment includes a management node 10, three computer nodes 20, and a user terminal 30. The parallel computing system 1 may include further computer nodes 20. Three computer nodes 20 and the management node 10 are coupled to each other through a network 2. The user terminal 30 is coupled to the management node 10.
The management node 10 is a device that manages the parallel computing system 1, and for example, performs scheduling of jobs executed by the parallel computing system 1, execution management of the jobs, collection of execution information of the jobs, and the like.
The computer node 20 is a computer that executes a job. Each of the computer nodes 20 includes four processors 21, and each of the processors 21 includes two processor cores 22. The processor 21 is a device that executes calculation processing, and each of the processor cores 22 executes the calculation processing. Each of the computer node 20 may include further processors 21, and each of the processors 21 may include further processor cores 22.

The user terminal 30 is a device used by the user of the parallel computing system 1 to input a job. In addition, the user terminal 30 displays, on a display device, the scheduled execution start time of the job the scheduling of which has been performed.

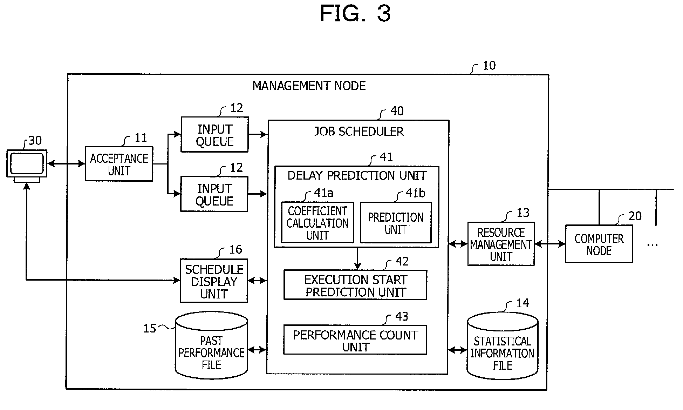

FIG. 3 illustrates a configuration of the management node 10. As illustrated in FIG. 3, the management node 10 includes an acceptance unit 11, two input queues 12, a job scheduler 40, a resource management unit 13, a statistical information file 14, a past performance file 15, and a schedule display unit 16.

The acceptance unit 11 accepts a job input by the user through the user terminal 30 and inputs the job to one of the two input queues 12. The input queue 12 is a queue that stores the input job. The job has a priority level, and the acceptance unit 11 determines, based on the priority level, an input queue 12 that is to store the job. The management node 10 may include three or more input queues 12.

The job scheduler 40 performs scheduling of the job stored in the input queue 12 and creates a job schedule indicating the scheduled execution start time of the job and the like. The resource management unit 13 manages the computer node 20 and causes the computer node 20 to execute the job based on the job schedule that has been created by the job scheduler 40.

The statistical information file 14 is a file that stores information on the job that has been executed by the computer node 20 as statistical information. The statistical information includes a user name, a job name, an ID, a queue name, an initial scheduled execution start date and time, an execution start date and time, an end date and time, and a specified execution time duration.

The user name is the name of the user who requests a job. The job name is the name of the job. The ID is an identifier used to identify the job. The queue name is the name of an input queue to which the job has been input. The initial scheduled execution start date and time is the initial scheduled execution start date and time after the job has been input. The specified execution time duration is an execution time duration of the job that has been specified by the user.

The past performance file 15 is a file that stores information on past performance used by the job scheduler 40 for the prediction of a delay time. The past performance file 15 is created from the statistical information file 14. The past performance file 15 includes a user name, a job name, an ID, a queue name, a day of the week and a time period when the job was executed, a specified execution time duration, and a delay time.

The schedule display unit 16 displays, on the user terminal 30, a job schedule that has been created by the job scheduler 40.

The job scheduler 40 includes a delay prediction unit 41, an execution start prediction unit 42, and a performance count unit 43. The delay prediction unit 41 predicts a delay time for the execution start time of each job on which future allocation has been performed. Here, the future allocation is the allocation of a job that is to be executed in the future to the processor 21.

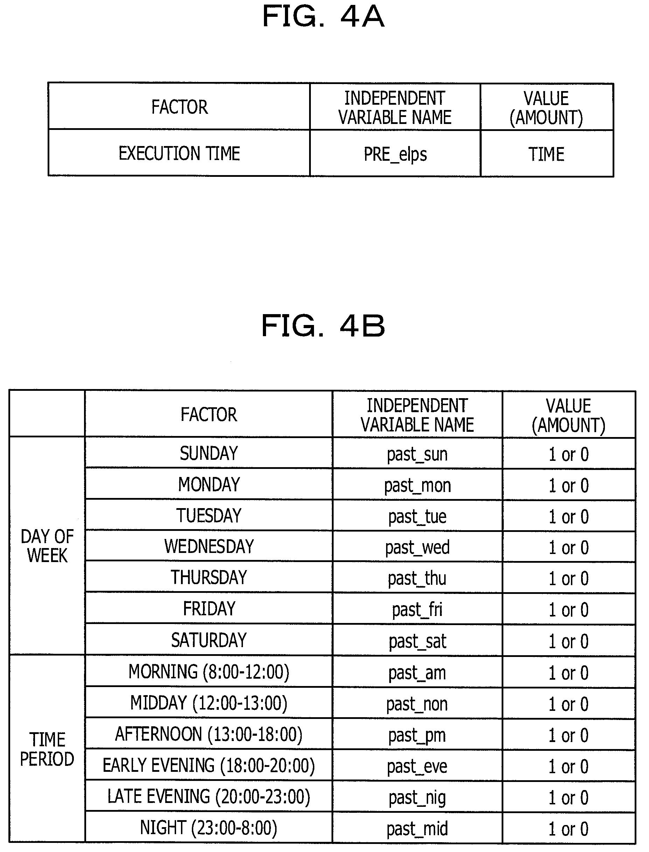

The delay prediction unit 41 predicts the delay time of each of the jobs, by using the multiple regression analysis based on the past performance. The delay prediction unit 41 performs the multiple regression analysis by using the delay prediction time as a dependent variable and using a factor related to the user and the job and a factor related to a trend as independent variables. FIG. 4A illustrates a factor related to the user and the job, and FIG. 4B illustrates factors related to the trend.

As illustrated in FIG. 4A, as the factor related to the user and the job, there is an execution time of the job, which has been specified by the user. In the execution time, an independent variable name used for the multiple regression analysis is "PRE_elps", and the value is a time having a unit of minutes.

As illustrated in FIG. 4B, as the factor related to the trend, there is a day of the week and a time period when the job is executed. The time period is obtained by dividing a day into "Morning (8-12)", "Midday (12-13)", "Afternoon (13-18)", "Early evening (18-20)", "Late evening (20-23)", and "Night (23-8)".

For each of the days of the week, the independent variable name used for the multiple regression analysis is "past_x", the value "1" is merely applied to the day of the week on which the job is executed, and "0" is applied to the other days of the week. Here, "x" denotes an abbreviation of the day of the week, and "sun" corresponds to Sunday, "mon" corresponds to Monday, "tue" corresponds to Tuesday, "wed" corresponds to Wednesday, "thu" corresponds to Thursday, "fri" corresponds to Friday, and "sat" corresponds to Saturday.

In each of the time periods, the independent variable name used for the multiple regression analysis is "past_y", the value "1" is merely applied to a time period in which the job is executed, and "0" is applied to the other time periods. Here, "y" denotes an abbreviation of the time period, and "am" corresponds to Morning, "non" corresponds to Midday, "pm" corresponds to Afternoon, "eve" corresponds to Early evening, "lev" corresponds to Late evening, and "mid" corresponds to Night.

The delay prediction unit 41 includes a coefficient calculation unit 41a and a prediction unit 41b. The coefficient calculation unit 41a calculates a coefficient of a multiple regression equation used for predicting delay based on the past performance for each of the jobs and for each of the input queues 12. The multiple regression equation is "delay prediction time=PRE_elps*a+past_mon*b+past_tue*c+past_wed*d+past_thu*e+past_fri* f+past_sat*g+past_am*h+past_non*i+past_pm*j+past_eve*k+past_lev*l+dela y time", and "a" to "l" and "delay time" are coefficients calculated by the delay prediction unit 41. Sunday as the day of the week and Midnight as the time period from among the factors are removed from the multiple regression equation.

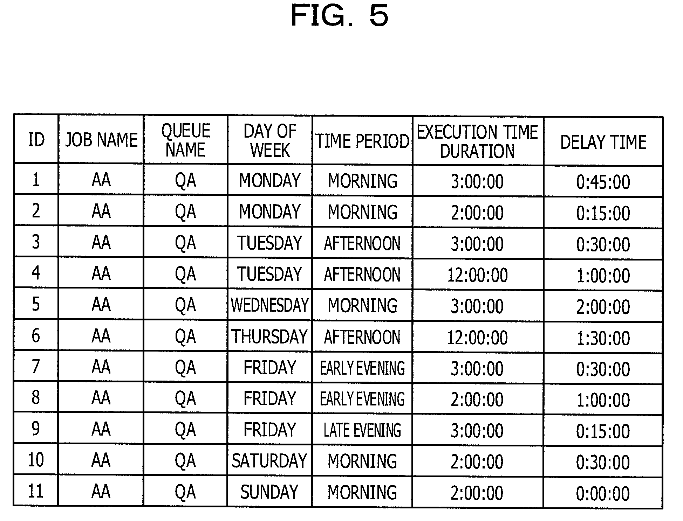

FIG. 5 illustrates a delay performance example used for calculation of coefficients. In FIG. 5, an ID is an identifier used to identify each past delay performance piece. For example, in the delay performance for which the identifier is "1", the job name is "AA", the job queue name is "QA", the day of the week and the time period when the job was executed are respectively "Monday" and "Morning", the execution time duration that has been specified by the user is "three hours", the delay time is "45 minutes". In FIG. 5, 11 pieces of delay performance are merely illustrated, but further pieces of delay performance are used for the calculation of coefficients.

The coefficient calculation unit 41a obtains a multiple regression equation that is "delay prediction time=PRE_elps*(0.05422)+past_mon*(-29.096)+past_tue*(-30.361)+past_wed*(0)+past_thu*(0)+past_fri*(-45.723)+p ast_sat*(-42.47)+past_am*(0)+past_non*(0)+past_pm*(0) +past_eve*(31.6265)+past_lev*(0)+50.9639" by using the delay performance items illustrated in FIG. 5.

The prediction unit 41b calculates a delay prediction time from the factor of the job by using the multiple regression equation with which the coefficient calculation unit 41a has calculated the coefficients. For example, the delay prediction time of a job in which the execution time duration that has been specified by the user is three hours and that is executed on Monday morning is obtained as follows because "PRE_elps=180", "past_mon=1", and "past_am=0" are satisfied, and the value of a further independent variable is 0.

[0048] Delay prediction time=180*(0.05422)+1*(-29.096)+0*(-30.361)+0*(0) +0*(0)+0*(-45.723)+0*(-42.47)+1*(0)+0*(0)+0*(0)+0*(31.6265)+0*(0)+50.9639=31.6275 minutes.

Returning to FIG. 3, the execution start prediction unit 42 predicts a scheduled execution start time of the job by performing future allocation of the job and calculates a scheduled execution start time by adding the predicted scheduled execution start time to the delay prediction time that has been predicted by the delay prediction unit 41. That is, the execution start prediction unit 42 calculates the scheduled execution start time of the job in accordance with the equation "scheduled execution start time=scheduled execution start time based on the future allocation+delay prediction time".

The performance count unit 43 creates the past performance file 15 by extracting information on the past performance used for the multiple regression analysis, for each of the jobs and for each of the input queues 12, from the statistical information stored in the statistical information file 14. That is, the performance count unit 43 creates the past performance file 15 by extracting information used for the multiple regression analysis, for each of the jobs and for each of the input queues 12, from the past job execution information.

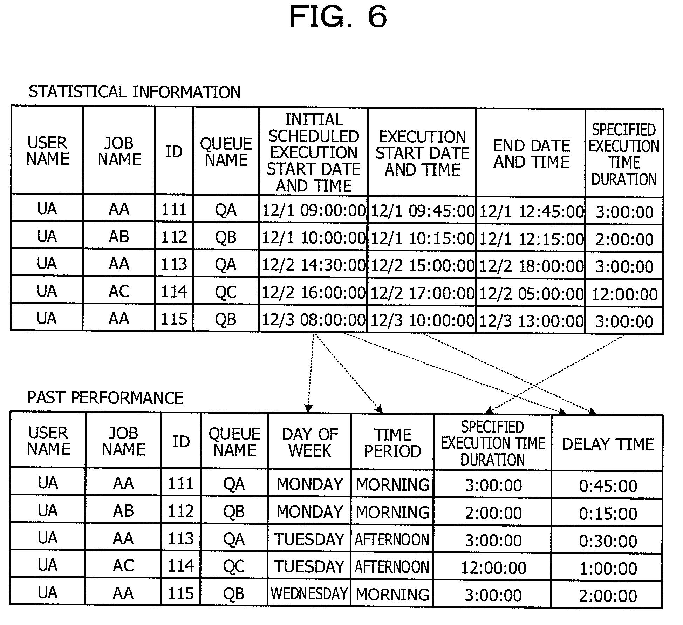

FIG. 6 illustrates a creation example of past performance based on statistical information. As illustrated in FIG. 6, a day of a week and a time period of the past performance are obtained from the initial scheduled execution start date and time of the statistical information, and a delay time is calculated by subtracting the initial scheduled execution start date and time from the execution start date and time of the statistical information.

For example, the day of the week "Monday" and the time period "Morning" are obtained from the initial scheduled execution start date and time "12/1 09:00:00" of the statistical information. In addition, the delay time "0:45:00" is calculated by subtracting the initial scheduled execution start date and time "12/1 09:00:00" from the execution start date and time "12/1 09:45:00" of the statistical information.

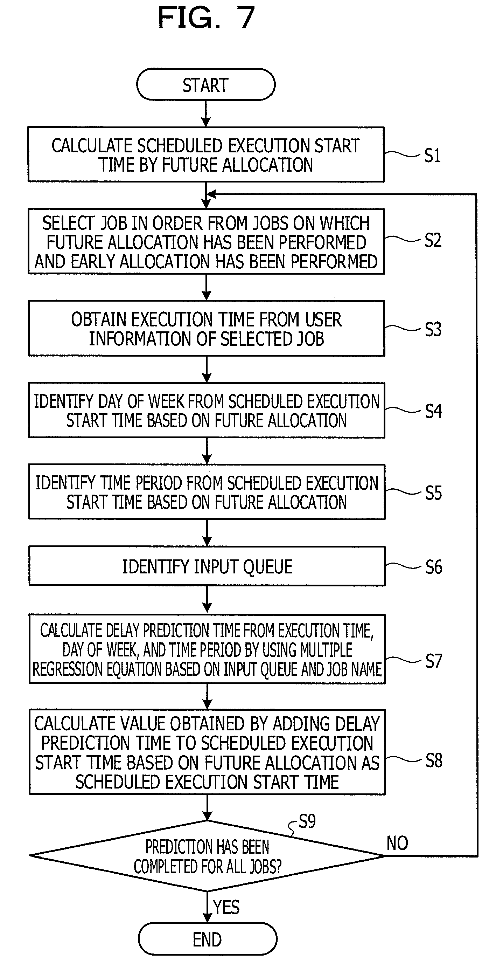

A flow of calculation processing of a scheduled execution start time by the job scheduler 40 is described below. FIG. 7 is a flowchart illustrating the flow of the calculation processing of the scheduled execution start time by the job scheduler 40.

As illustrated in FIG. 7, the execution start prediction unit 42 calculates a scheduled execution start time by future allocation (Step S1). In addition, the prediction unit 41b selects a job in order from jobs on which future allocation has been completed and early allocation has been performed (Step S2) and obtains an execution time duration from user information of the selected job (Step S3).

In addition, the prediction unit 41b identifies a day of a week and a time period from the scheduled execution start time based on the future allocation (Steps S4 and S5) and identifies an input queue 12 to which the job has been input (Step S6). In addition, the prediction unit 41b calculates a delay prediction time from the execution time duration, the day of the week, and the time period by using the multiple regression equation based on the input queue 12 and the job name (Step S7). In addition, the execution start prediction unit 42 calculates a value that has been obtained by adding the delay prediction time to the scheduled execution start time based on the future allocation as a scheduled execution start time (Step S8).

In addition, the job scheduler 40 determines whether the prediction has been performed on all jobs on which the future allocation has been performed (Step S9), and when there is a job the prediction of which is yet to be performed, the processing returns to Step S2, and when the prediction has been performed for all of the jobs, the processing ends.

As described above, in the embodiment, for the job on which the future allocation has been performed, the delay prediction unit 41 calculates a delay prediction time based on the multiple regression analysis, and the execution start prediction unit 42 sets a value that has been obtained by adding the delay prediction time to the scheduled execution start time based on the future allocation as a scheduled execution start time. Thus, the execution start time of the job is accurately predicted by the job scheduler 40.

In addition, in the embodiment, delay of a job depends on a day of a week and a time period when the job is executed, and the delay prediction unit 41 performs the multiple regression analysis by using the day of the week and the time period when the job is executed as factors, so that the delay prediction time is accurately calculated.

In addition, in the embodiment, delay of a job depends on an execution time duration of the job, which is specified by the user, and the delay prediction unit 41 performs the multiple regression analysis by using the execution time duration of the job, which is specified by the user, as a factor, so that the delay prediction time is accurately calculated.

In the embodiment, the job scheduler 40 is described above, but when a configuration included in the job scheduler 40 is achieved by software, a job execution start time prediction program having a similar function may be obtained. A computer that executes the job execution start time prediction program is described below.

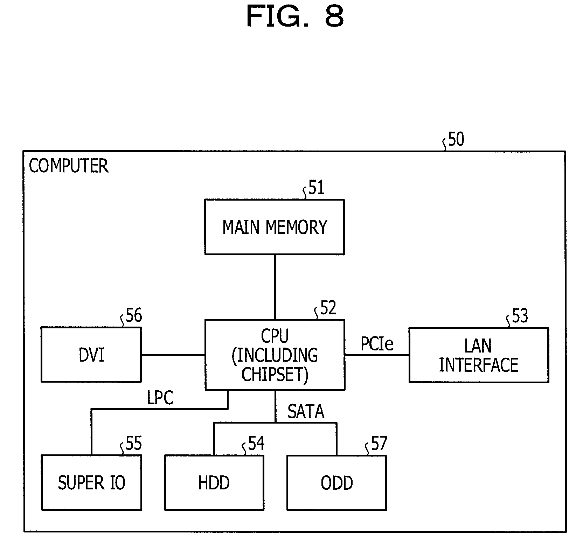

FIG. 8 is a diagram illustrating a configuration of a computer that executes the job execution start time prediction program according to the embodiment. As illustrated in FIG. 8, a computer 50 includes a main memory 51, a central processing unit (CPU) 52, a local area network (LAN) interface 53, and a hard disk drive (HDD) 54. In addition, the computer 50 includes a super input/output (IO) 55, a digital visual interface (DVI) 56, and an optical disk drive (ODD) 57.

The main memory 51 is a memory that stores a program, an execution intermediate result of the program, and the like. The CPU 52 is a central processing device that reads the program from the main memory 51 and executes the program. The CPU 52 includes a chipset including a memory controller.

The LAN interface 53 is an interface used to couple the computer 50 to a further computer through a LAN. The HDD 54 is a disk device that stores a program and data, and the super IO 55 is an interface used to couple an input device such as a mouse and a keyboard to the computer 50. The DVI 56 is an interface used to couple a liquid crystal display device to the computer 50, and the ODD 57 is a device that performs reading and writing of a DVD.

The LAN interface 53 is coupled to the CPU 52 by PCI express (PCIe), and the HDD 54 and the ODD 57 are coupled to the CPU 52 by serial advanced technology attachment (SATA). The super IO 55 is coupled to the CPU 52 by low pin count (LPC).

In addition, the job execution start time prediction program executed in the computer 50 is stored in a DVD, read from the DVD by the ODD 57, and installed to the computer 50. Alternatively, the job execution start time prediction program is stored in a database or the like of a further computer system coupled through the LAN interface 53, read from the database, and installed to the computer 50. In addition, the installed job execution start time prediction program is stored in the HDD 54, read to the main memory 51, and executed by the CPU 52.

In addition, in the embodiment, the case in which the scheduling of jobs in the parallel computing system is performed is described above, but the embodiment is not limited to such a case and may be applied to a case in which the scheduling of jobs in a further computer system is performed.

In addition, in the embodiment, the case in which the management node 10 is a device different from the computer node 20 is described above, but the embodiment is not limited to such a case, and one of the computer nodes 20 may have a function of the management node 10.

**Claims**

1. A system comprising:

   a calculating device configured to execute a job; and
   a management device configured to schedule an execution start time of the job executed by the calculating device, the management device comprising a memory and a processor coupled to the memory and configured to:

      obtain a first time that is a scheduled time of when the job will start to be executed by the calculating device,
      calculate a delay time for the job by performing multiple regression analysis based on past execution performance of the calculation device,
predict the execution start time of the job based on the first time and the delay time, and
output the predicted execution start time to an output device.

2. The system according to claim 1, wherein the processor is configured to
calculate the delay time by performing the multiple regression analysis based on a day of a week and a time period corresponding to the first time.

3. The system according to claim 1, wherein the processor is configured to
calculate the delay time by performing the multiple regression analysis based on priority level of the job.

4. The system according to claim 1, wherein the processor is configured to
calculate the delay time by performing the multiple regression analysis based on an execution time duration of the job.

5. A method of causing a computer to predict an execution start time of a job, the method comprising:

obtaining, by a processor, a first time that is a scheduled time of when a job will start to be executed by a calculating device;
calculating, by the processor, a delay time for the job by performing multiple regression analysis based on past execution performance of the calculation device;
predicting, by the processor, the execution start time of the job based on the first time and the delay time; and
outputting, by the processor, the predicted execution start time to an output device.

6. The method according to claim 5, wherein the calculating calculates the delay time by performing the multiple regression analysis based on a day of a week and a time period corresponding to the first time.

7. The method according to claim 5, wherein the calculating calculates the delay time by performing the multiple regression analysis based on priority level of the job.

8. The method according to claim 5, wherein the calculating calculates the delay time by performing the multiple regression analysis based on an execution time duration of the job.

# FIG. 1

CURRENT
TIME

10:00    11:00    12:00    13:00    14:00

JobR

JobB

JobA

JobC

⊞ :PREDICTED DELAY TIME

# FIG. 2

# FIG. 3

# FIG. 4A

| FACTOR | INDEPENDENT VARIABLE NAME | VALUE (AMOUNT) |
|---|---|---|
| EXECUTION TIME | PRE_elps | TIME |

# FIG. 4B

| | FACTOR | INDEPENDENT VARIABLE NAME | VALUE (AMOUNT) |
|---|---|---|---|
| DAY OF WEEK | SUNDAY | past_sun | 1 or 0 |
| | MONDAY | past_mon | 1 or 0 |
| | TUESDAY | past_tue | 1 or 0 |
| | WEDNESDAY | past_wed | 1 or 0 |
| | THURSDAY | past_thu | 1 or 0 |
| | FRIDAY | past_fri | 1 or 0 |
| | SATURDAY | past_sat | 1 or 0 |
| TIME PERIOD | MORNING (8:00-12:00) | past_am | 1 or 0 |
| | MIDDAY (12:00-13:00) | past_non | 1 or 0 |
| | AFTERNOON (13:00-18:00) | past_pm | 1 or 0 |
| | EARLY EVENING (18:00-20:00) | past_eve | 1 or 0 |
| | LATE EVENING (20:00-23:00) | past_nig | 1 or 0 |
| | NIGHT (23:00-8:00) | past_mid | 1 or 0 |

# FIG. 5

| ID | JOB NAME | QUEUE NAME | DAY OF WEEK | TIME PERIOD | EXECUTION TIME DURATION | DELAY TIME |
|----|----------|------------|-------------|-------------|-------------------------|------------|
| 1 | AA | QA | MONDAY | MORNING | 3:00:00 | 0:45:00 |
| 2 | AA | QA | MONDAY | MORNING | 2:00:00 | 0:15:00 |
| 3 | AA | QA | TUESDAY | AFTERNOON | 3:00:00 | 0:30:00 |
| 4 | AA | QA | TUESDAY | AFTERNOON | 12:00:00 | 1:00:00 |
| 5 | AA | QA | WEDNESDAY | MORNING | 3:00:00 | 2:00:00 |
| 6 | AA | QA | THURSDAY | AFTERNOON | 12:00:00 | 1:30:00 |
| 7 | AA | QA | FRIDAY | EARLY EVENING | 3:00:00 | 0:30:00 |
| 8 | AA | QA | FRIDAY | EARLY EVENING | 2:00:00 | 1:00:00 |
| 9 | AA | QA | FRIDAY | LATE EVENING | 3:00:00 | 0:15:00 |
| 10 | AA | QA | SATURDAY | MORNING | 2:00:00 | 0:30:00 |
| 11 | AA | QA | SUNDAY | MORNING | 2:00:00 | 0:00:00 |

# FIG. 6

STATISTICAL INFORMATION

| USER NAME | JOB NAME | ID | QUEUE NAME | INITIAL SCHEDULED EXECUTION START DATE AND TIME | EXECUTION START DATE AND TIME | END DATE AND TIME | SPECIFIED EXECUTION TIME DURATION |
|---|---|---|---|---|---|---|---|
| UA | AA | 111 | QA | 12/1 09:00:00 | 12/1 09:45:00 | 12/1 12:45:00 | 3:00:00 |
| UA | AB | 112 | QB | 12/1 10:00:00 | 12/1 10:15:00 | 12/1 12:15:00 | 2:00:00 |
| UA | AA | 113 | QA | 12/2 14:30:00 | 12/2 15:00:00 | 12/2 18:00:00 | 3:00:00 |
| UA | AC | 114 | QC | 12/2 16:00:00 | 12/2 17:00:00 | 12/2 05:00:00 | 12:00:00 |
| UA | AA | 115 | QB | 12/3 08:00:00 | 12/3 10:00:00 | 12/3 13:00:00 | 3:00:00 |

PAST PERFORMANCE

| USER NAME | JOB NAME | ID | QUEUE NAME | DAY OF WEEK | TIME PERIOD | SPECIFIED EXECUTION TIME DURATION | DELAY TIME |
|---|---|---|---|---|---|---|---|
| UA | AA | 111 | QA | MONDAY | MORNING | 3:00:00 | 0:45:00 |
| UA | AB | 112 | QB | MONDAY | MORNING | 2:00:00 | 0:15:00 |
| UA | AA | 113 | QA | TUESDAY | AFTERNOON | 3:00:00 | 0:30:00 |
| UA | AC | 114 | QC | TUESDAY | AFTERNOON | 12:00:00 | 1:00:00 |
| UA | AA | 115 | QB | WEDNESDAY | MORNING | 3:00:00 | 2:00:00 |

# FIG. 7

START

CALCULATE SCHEDULED EXECUTION START TIME BY FUTURE ALLOCATION — S1

SELECT JOB IN ORDER FROM JOBS ON WHICH FUTURE ALLOCATION HAS BEEN PERFORMED AND EARLY ALLOCATION HAS BEEN PERFORMED — S2

OBTAIN EXECUTION TIME FROM USER INFORMATION OF SELECTED JOB — S3

IDENTIFY DAY OF WEEK FROM SCHEDULED EXECUTION START TIME BASED ON FUTURE ALLOCATION — S4

IDENTIFY TIME PERIOD FROM SCHEDULED EXECUTION START TIME BASED ON FUTURE ALLOCATION — S5

IDENTIFY INPUT QUEUE — S6

CALCULATE DELAY PREDICTION TIME FROM EXECUTION TIME, DAY OF WEEK, AND TIME PERIOD BY USING MULTIPLE REGRESSION EQUATION BASED ON INPUT QUEUE AND JOB NAME — S7

CALCULATE VALUE OBTAINED BY ADDING DELAY PREDICTION TIME TO SCHEDULED EXECUTION START TIME BASED ON FUTURE ALLOCATION AS SCHEDULED EXECUTION START TIME — S8

PREDICTION HAS BEEN COMPLETED FOR ALL JOBS? — S9 — NO

YES

END

# FIG. 8

COMPUTER 50

MAIN MEMORY 51

DVI 56

CPU (INCLUDING CHIPSET) 52

PCIe

LAN INTERFACE 53

LPC

SATA

SUPER IO 55

HDD 54

ODD 57

# FIG. 9

CURRENT
TIME

10:00  11:00  12:00  13:00  14:00

JobR

JobB

JobA

JobC

CURRENT
TIME

JOB INPUT

10:00  11:00  12:00  13:00  14:00

JobR

JobB

JobD

JobA

JobC

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/087713 A2 (YISSUM RES DEV CO [IL]; TSAFRIR DAN [IL]; ETSION YOAV [IL]; FEITELSON) 24 August 2006 (2006-08-24) * abstract * * figures 1a,1b,4a,4b,4c * * page 4 - page 6 * * page 27 - page 28 * ----- | 1-8 | INV. G06Q10/06 G06F9/48 G06F9/50 |

TECHNICAL FIELDS
SEARCHED    (IPC)

G06Q
G06F

The present search report has been drawn up for all claims

| Place of search | Date of completion of the search | Examiner |
|---|---|---|
| Munich | 11 May 2016 | Härdeman, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 3351

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2016

| Patent document cited in search report | Publication date | Patent family member(s) | Publication date |
|---|---|---|---|
| WO 2006087713 A2 | 24-08-2006 | US 2008155550 A1<br>WO 2006087713 A2 | 26-06-2008<br>24-08-2006 |

EPO FORM P0459

For more details about this annex : see Official Journal of the European Patent Office, No. 12/82

**EP 3 079 111 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009230584 A
- JP 2012173753 A
- JP 2004295731 A